(19) Europäisches Patentamt
European Patent Office
Office européen des brevets

(11) Veröffentlichungsnummer: **0 251 120**
**B1**

(12) # EUROPÄISCHE PATENTSCHRIFT

(45) Veröffentlichungstag der Patentschrift: **29.08.90**

(51) Int. Cl.[5]: **C09B 31/02,** D06P 1/18

(21) Anmeldenummer: **87108951.2**

(22) Anmeldetag: **23.06.87**

(54) **Disazothiophenfarbstoffe.**

(30) Priorität: **03.07.86 DE 3622297**

(43) Veröffentlichungstag der Anmeldung:
**07.01.88 Patentblatt 88/1**

(45) Bekanntmachung des Hinweises auf die Patenterteilung:
**29.08.90 Patentblatt 90/35**

(84) Benannte Vertragsstaaten:
**CH DE FR GB IT LI**

(56) Entgegenhaltungen:
**FR-A- 2 281 408**
**FR-A- 2 313 431**

**CHEMICAL ABSTRACTS, Band 104, Nr. 22, Juni 1986, Seite 92, Zusammenfassung Nr. 188160v, Columbus, Ohio, US; & JP-A-60 223 863 (MITSUI TOATSU CHEMICALS, INC.) 08-11-1985**
**CHEMICAL ABSTRACTS, Band 105, Nr. 16, Oktober 1986, Seite 76, Zusammenfassung Nr. 135409x, Columbus, Ohio, US; & JP-A-61 28 556 (MITSUI TOATSU CHEMICALS, INC.) 08-02-1986**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen(DE)**

(72) Erfinder: **Etzbach, Karl-Heinz, Dr., Carl-Bosch-Ring 55, D-6710 Frankenthal(DE)**
Erfinder: **Hansen, Guenter, Dr., Alwin-Mittasch-Platz 8, D-6700 Ludwigshafen(DE)**
Erfinder: **Schefczik, Ernst, Dr., Dubliner Strasse 7, D-6700 Ludwigshafen(DE)**
Erfinder: **Reichelt, Helmut, Dr., Weinbachstrasse 20, D-6701 Niederkirchen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 251 120 B1

ACTORUM AG

## Beschreibung

Die vorliegende Erfindung betrifft Disazothiophenfarbstoffe der Formel I

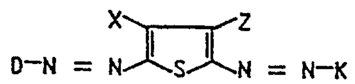

(I),

in der

X Fluor, Chlor, Brom, Hydroxy, Mercapto, $C_1$–$C_4$-Alkoxy, das gegebenenfalls durch Phenyl substituiert ist, $C_5$–$C_7$-Cycloalkoxy, gegebenenfalls substituiertes Phenoxy, $C_1$–$C_4$-Alkylthio, das gegebenenfalls durch Phenyl substituiert ist, $C_5$–$C_7$-Cycloalkylthio, gegebenenfalls substituiertes Phenylthio oder den Rest $SO_2$-E, wobei E für gegebenenfalls durch Phenyl substituiertes $C_1$–$C_8$-Alkyl, $C_3$–$C_4$-Alkenyl, $C_5$–$C_7$-Cycloalkyl, gegebenenfalls substituiertes Phenyl, Hydroxy, $C_1$–$C_4$-Alkoxy, das gegebenenfalls durch Phenyl substituiert ist, gegebenenfalls substituiertes Phenoxy, Amino, $C_1$–$C_4$-Mono- oder Dialkylamino oder gegebenenfalls substituiertes Phenylamino steht,

Z Cyano, Nitro, $C_1$–$C_8$-Alkanoyl, gegebenenfalls substituiertes Benzoyl, $C_1$–$C_4$-Alkylsulfonyl, gegebenenfalls substituiertes Phenylsulfonyl, Carboxyl, $C_1$–$C_8$-Alkoxycarbonyl, dessen Alkylkette gegebenenfalls durch ein oder mehrere Sauerstoffatome unterbrochen ist, gegebenenfalls substituiertes Phenoxycarbonyl, Carbamoyl, $C_1$–$C_8$-Mono- oder Dialkylcarbamoyl, Pyrrolidinocarbonyl, Piperidinocarbonyl, Morpholinocarbonyl, Piperazinocarbonyl oder (N-$C_1$–$C_4$-Alkyl)piperazinocarbonyl,

den Rest einer Diazokomponente und

K den Rest einer Kupplungskomponente bedeuten.

Alle in den Formeln der erfindungsgemäßen Disazothiophenfarbstoffe auftretenden Alkylgruppen können sowohl geradkettig als auch verzweigt sein.

Für den Fall, daß in den Formeln der erfindungsgemäßen Disazothiophenfarbstoffe substituierte Phenylreste auftreten, kommen als Substituenten $C_1$–$C_4$-Alkyl, $C_1$–$C_4$-Alkoxy oder Halogen in Betracht.

Reste X sind neben den bereits genannten, z.B. $OCH_3$, $OC_2H_5$, $OC_3H_7$, $OC_4H_9$, $OCH_2C_6H_5$, $OC_6H_5$, $OC_6H_4CH_3$, $OC_6H_4Cl$, $SCH_3$, $SC_2H_5$, $SC_3H_7$, $SC_4H_9$, $SCH_2C_6H_5$, $SC_6H_{11}$, $SC_6H_5$ oder $SC_6H_4CH_3$.

Reste E sind beispielsweise

$CH_3$, $C_2H_5$, $C_3H_7$, $C_4H_9$, $C_6H_{13}$, $C_6H_{11}$, $C_8H_{17}$, $C_6H_5$-$CH_2$, $C_6H_5$-$CH_2$-$CH_2$, $C_6H_5$, Cl-$C_6H_4$, $C_4H_9$-$C_6H_4$, Cl, OH, $CH_3O$, $C_2H_5O$, $C_3H_7O$, $C_4H_9O$, $C_6H_5$-$CH_2O$, $C_6H_5$-$CH_2$-$CH_2O$, $C_6H_5O$, $ClC_6H_4O$, $CH_3C_6H_4O$, $NH_2$, $NHCH_3$, $N(CH_3)_2$, $NHC_2H_5$, $N(C_2H_5)_2$, $NHC_4H_9$, $N(C_4H_9)_2$, $NHC_6H_5$, $NHC_6H_4$-$CH_3$, $NHC_6H_4Cl$ oder $NCH_3C_6H_4$.

Reste Z sind neben den bereits genannten im einzelnen, z.B.

$CH_3CO$, $C_2H_5CO$, $C_3H_7CO$, $C_4H_9CO$, $C_5H_{11}CO$, $C_7H_{15}CO$, $OCCH\begin{smallmatrix}C_2H_5\\ C_4H_9\end{smallmatrix}$, $C_6H_5CO$,

$CH_3C_6H_4CO$, $ClC_6H_4CO$, $(CH_3)_2C_6H_3CO$, $H_3COC_6H_4CO$, $Cl_2C_6H_3CO$, $CH_3SO_2$, $C_2H_5SO_2$,

$C_4H_9SO_2$, $C_6H_5SO_2$, $CH_3C_6H_4SO_2$, $ClC_6H_4SO_2$, $COOCH_3$, $COOC_2H_5$, $COOC_3H_7$,

$COOC_4H_9$, $COOC_6H_{13}$, $COOC_8H_{17}$, $COOCH_2CH\begin{smallmatrix}C_2H_5\\ C_4H_9\end{smallmatrix}$, $COOC_2H_4OCH_3$, $COOC_2H_4OC_2H_5$,

$COOC_2H_4OC_4H_9$, $COOC_6H_5$, $COOC_6H_4CH_3$, $CONH_2$, $CONHCH_3$, $CONHC_2H_5$, $CONHC_4H_9$,

$CONHC_6H_{13}$, $CONHC_8H_{17}$, $CON(CH_3)_2$, $CON(C_2H_5)_2$, $CON(C_4H_9)_2$ oder $CON\begin{smallmatrix}CH_3\\ C_2H_5\end{smallmatrix}$.

Die Reste D der Diazokomponenten leiten sich vorwiegend aus der Anilinreihe oder von heterocyclischen Komponenten, z.B. aus der Thiophen-, Thiazol-, Isothiazol-, Thiadiazol-, Benzthiazol und Benzisothiazolreihe ab.

Die Diazokomponenten $DNH_2$ entsprechen dabei der Formel

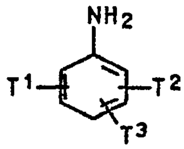 , 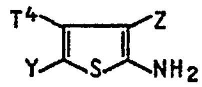 oder 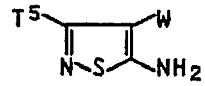

wobei

$T^1$ und $T^2$ Wasserstoff, Chlor, Brom, Cyano, $CF_3$, Nitro, $C_1$-$C_4$-Alkyl, $C_1$-$C_4$-Alkoxy, Phenoxy, Phenyl, $C_1$-$C_4$-Alkylcarbonyl, $C_1$-$C_4$-Alkoxycarbonyl, $C_1$-$C_4$-Alkylsulfonyl, gegebenenfalls substituiertes Phenylsulfonyl Benzylsulfonyl, Carboxyl, Carbamoyl, $C_1$-$C_4$-Mono- oder Dialkylcarbamoyl, das gegebenenfalls durch Hydroxy substituiert ist, Sulfamoyl oder $C_1$-$C_4$-Mono- oder Dialkylsulfamoyl, das gegebenenfalls durch Hydroxy substituiert ist,

$T^3$ Wasserstoff, Chlor, Brom, $C_1$-$C_4$-Alkyl oder Cyano,

$T^4$ Wasserstoff, $C_1$-$C_4$-Alkyl, gegebenenfalls substituiertes Phenyl, Thienyl, Furyl, Halogen, $C_1$-$C_4$-Alkylsulfonyl, gegebenenfalls substi tuiertes Phenylsulfonyl, $C_1$-$C_4$-Alkoxy, Phenoxy, gegebenenfalls substituiertes $C_1$-$C_4$-Alkylthio oder Phenylthio,

$T^5$ jeweils gegebenenfalls substituiertes $C_1$-$C_4$-Alkyl oder Phenyl,

Y Wasserstoff, $C_1$-$C_4$-Alkyl, gegebenenfalls substituiertes Phenyl, Chlor, Brom, Nitro, Cyano, $C_1$-$C_4$-Alkanoyl, Benzoyl, $C_1$-$C_4$-Alkoxycarbonyl, $C_1$-$C_4$-Alkyl- oder Phenylsulfonyl und

W Cyano, Nitro, $C_1$-$C_4$-Alkoxycarbonyl, Phenoxycarbonyl, Chlor oder Brom bedeuten und Z die obengenannte Bedeutung besitzt.

Reste $T^1$ und $T^2$ sind neben den bereits genannten beispielsweise Methyl, Ethyl, Methoxy, Ethoxy, Methylcarbonyl, Ethoxycarbonyl, Ethylsulfonyl, Phenylsulfonyl, Dimethylcarbamoyl, 2-Hydroxyethylcarbamoyl oder 2-Hydroxypropylsulfamoyl.

Reste $T^3$ sind neben den bereits genannten beispielsweise Methyl, Ethyl, Propyl oder Butyl.

Für den Fall, daß $T^4$ für substituiertes $C_1$-$C_4$-Alkylthio steht, kommen als Substituenten Hydroxy, $C_1$-$C_4$-Alkoxycarbonyl, $C_1$-$C_4$-Alkylcarbonyl, Cyano oder Nitro in Betracht. $T^4$ steht beispielsweise für Methyl, Ethyl, 4-Chlorphenyl, Thien-2-yl, Fur-2-yl, Chlor, Brom, Methylsulfonyl, Erthylsulfonyl, Methoxy, Ethoxy, Methylthio, Ethylthio oder 2-Hydroxyethylthio.

Alle genannten Reste $T^5$ können beispielsweise durch Chlor, Brom, Hydroxy oder $C_1$-$C_4$-Alkoxy substituiert sein. $C_1$-$C_4$-Alkyl kann zusätzlich durch Phenyl substituiert sein. $T^5$ steht beispielsweise für Methyl, Ethyl, Isopropyl, Benzyl, 2-Phenylethyl, 2-Hydroxyethyl, 2-Methoxyethyl, 2-Chlorphenyl oder 2-Hydroxyphenyl.

Reste Y sind im einzelnen neben den bereits genannten z.B. HCO, $CH_3CO$, $C_2H_5CO$, $C_6H_5CO$, $CH_3SO_2$, $C_2H_5SO_2$, $C_6H_5SO_2$, $CH_3$, $C_2H_5$, $C_3H_7$, $C_4H_9$, $C_6H_5$, $C_6H_4CH_3$, $C_6H_4Cl$ oder $C_6H_4OCH_3$.

Als Reste W kommen neben den bereits genannten beispielsweise Methoxycarbonyl, Ethoxycarbonyl, Butoxycarbonyl oder Phenoxycarbonyl in Betracht.

Die Reste K der Kupplungskomponenten leiten sich vorzugsweise aus der Anilin-, α-Naphthylamin-, Pyrazol-, Aminopyrazol-, Indol-, Thiazol-, Thiophen-, Phenol-, Naphthol-, Tetrahydrochinolin, Pyridon- oder Pyridinreihe ab, wobei solche, die sich aus der Pyrazol-, Pyridin-, Thiopen-, Thiazol- oder Pyridinreihe und insbesondere aus der Anilinreihe ableiten, bevorzugt sind.

Die Kupplungskomponenten HK entsprechen insbesondere der Formel

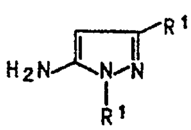 , 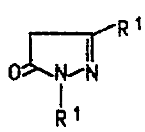 , 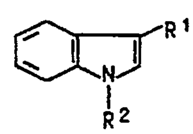 , 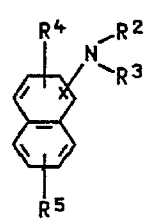 , 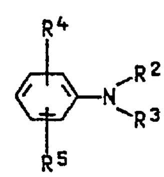 ,

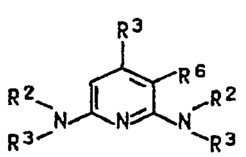 , 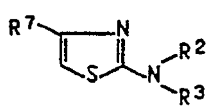 , 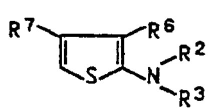 oder 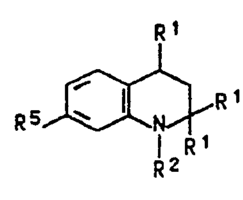

wobei

$R^1$ Wasserstoff, $C_1$-$C_4$-Alkyl, das gegebenenfalls durch Phenyl substituiert ist, oder gegebenenfalls substituiertes Phenyl,

$R^2$ Wasserstoff oder $R^3$,

$R^3$ ge[illegible]enfalls substituiertes $C_1$-$C_6$-Alkyl, $C_5$-$C_7$-Cycloalkyl, $C_3$-$C_4$-Alkenyl oder gegebenenfalls substitu[illegible]es Phenyl,
$R^4$ und $R^5$ unabhängig voneinander Wasserstoff, $C_1$-$C_4$-Alkyl, $C_1$-$C_4$-Alkoxy, Phenoxy, Benzyloxy, Halogen, $C_1$-$C_4$-Alkylsulfonylamino, $C_1$-$C_4$-Dialkylaminosulfonylamino oder jeweils gegebenenfalls substituiertes $C_1$-$C_4$-Alkoxycarbonylamino, Benzoylamino oder $C_1$-$C_6$-Alkanoylamino,
$R^6$ Cyano, Carbamoyl, $C_1$-$C_4$-Mono- oder Dialkylcarbamoyl, Nitro oder $C_1$-$C_8$-Alkoxycarbonyl, dessen Alkylkette gegebenenfalls durch ein oder mehrere Sauerstoffatome unterbrochen ist, und
$R^7$ Halogen, gegebenenfalls substituiertes Phenyl, $C_1$-$C_{10}$-Alkyl oder $C_1$-$C_{10}$-Alkoxy, das jeweils gegebenenfalls durch Phenyl substituiert und/oder deren Alkylkette jeweils gegebenenfalls durch ein oder mehrere Sauerstoffatome unterbrochen ist, Phenoxy, Nitro, $C_1$-$C_4$-Alkoxycarbonyl, $C_1$-$C_4$-Mono- oder Dialkylamino, $C_1$-$C_4$-Alkylthio, Phenylthio, $C_1$-$C_5$-Alkanoylamino, $C_1$-$C_4$-Alkoxycarbonylmethyl oder Cyanomethyl bedeuten.

Einzelne Reste $R^1$ sind neben den bereits genannten beispielsweise Methyl, Ethyl, Propyl, Butyl, Benzyl, Phenethyl, Phenyl, o-, m-, p-Tolyl oder o-, m-, p-Chlorphenyl.

Für den Fall, daß $R^3$ für substituiertes $C_1$-$C_6$-Alkyl steht, kommen als Substituenten Chlor, Brom, Hydroxy, $C_1$-$C_8$-Alkoxy, Phenoxy, Phenyl, Cyano, Carboxy, $C_1$-$C_8$-Alkanoyloxy, $C_1$-$C_8$-Alkoxy-$C_1$-$C_4$-alkoxy, Benzoyloxy, o-, m-, p-Methylbenzoyloxy, o-, m-, p-Chlorbenzoyloxy, $C_1$-$C_4$-Alkoxy-$C_1$-$C_8$-alkanoyloxy, Phenoxyalkanoyloxy, $C_1$-$C_8$-Alkoxycarbonyloxy, $C_1$-$C_4$-Alkoxy-$C_1$-$C_4$-alkoxycarbonyloxy, Benzyloxycarbonyloxy, Phenethyloxycarbonyloxy, Phenoxyethoxycarbonyloxy, $C_1$-$C_8$-Alkylaminocarbonyloxy, Cyclohexylaminocarbonyloxy, Phenylaminocarbonyloxy, $C_1$-$C_8$-Alkoxycarbonyl, $C_1$-$C_4$-Alkoxy-$C_1$-$C_4$-alkoxycarbonyl, Phenoxycarbonyl, Benzyloxycarbonyl, Phenoxy-$C_1$-$C_4$-alkoxy oder Phenethyloxycarbonyl in Betracht.

Einzelne Reste $R^3$ sind z.B. Methyl, Ethyl, Propyl, Butyl, Pentyl, Hexyl, Allyl, Methallyl, 2-Chlorethyl, 2-Bromethyl, 2-Cyanoethyl, 2-Hydroxyethyl, 2-Phenyl-2-hydroxyethyl, 2,3-Dihydroxypropyl, 2-Hydroxypropyl, 2-Hydroxybutyl, 2-Hydroxy-3-phenoxypropyl, 2-Hydroxy-3-methoxypropyl, 2-Hydroxy-3-butoxypropyl, 3-Hydroxypropyl, 2-Methoxyethyl, 2-Ethoxyethyl, 2-Propoxyethyl, 2-Butoxyethyl, 2-Phenoxyethyl, 2-Phenoxypropyl, 2-Acetoxyethyl, 2-Propionyloxyethyl, 2-Butyryloxyethyl, 2-Isobutyryloxyethyl, 2-Methoxymethylcarbonyloxyethyl, 2-Ethoxymethylcarbonyloxyethyl, 2-Phenoxymethylcarbonyloxyethyl, 2-Methoxycarbonyloxyethyl, 2-Ethoxycarbonyloxyethyl, 2-Propoxycarbonyloxyethyl, 2-Butoxycarbonyloxyethyl, 2-Phenyloxycarbonyloxyethyl, 2-Benzyloxycarbonyloxyethyl, 2-Methoxyethoxycarbonyloxyethyl, 2-Ethoxyethoxycarbonyloxyethyl, 2-Propoxyethoxycarbonyloxyethyl, 2-Butoxyethoxycarbonyloxyethyl, 2-Methylaminocarbonyloxyethyl, 2-Ethylaminocarbonyloxyethyl, 2-Propylaminocarbonyloxyethyl, 2-Butylaminocarbonyloxyethyl, 2-Methoxycarbonylethyl, 2-Ethoxycarbonylethyl, 2-Propoxycarbonylethyl, 2-Butoxycarbonylethyl, 2-Phenoxycarbonylethyl, 2-Benzyloxycarbonylethyl, 2-β-Phenylethoxycarbonylethyl, 2-Methoxyethoxycarbonylethyl, 2-Ethoxyethoxycarbonylethyl, 2-Propoxyethoxycarbonylethyl, 2-Butoxyethoxycarbonylethyl, 2-Phenoxyethoxycarbonylethyl, 2-Benzoylethyl, Cyclopentyl, Cyclohexyl, Phenyl oder 4-Methoxyphenyl.

Für den Fall, daß $R^4$ und $R^5$ jeweils für substituiertes $C_1$-$C_4$-Alkoxycarbonylamino, Benzoylamino oder $C_1$-$C_6$-Alkanoylamino stehen, kommen als Substituenten jeweils Chlor, Brom, Cyano, Methoxy, Ethoxy oder Phenoxy in Betracht. $R^4$ und $R^5$ stehen beispielsweise für Methyl, Ethyl, Methoxy, Ethoxy, Chlor, Brom, Methylsulfonylamino, Dimethylaminosulfonylamino, Methoxycarbonylamino, Acetylamino oder Chloracetylamino.

Reste $R^6$ sind neben den bereits genannten, z.B. Carbamoyl, Methylaminocarbonyl, Dimethylaminocarbonyl, Ethylaminocarbonyl, Diethylaminocarbonyl, Methoxycarbonyl, Ethoxycarbonyl, n- oder i-Propoxycarbonyl, n-, i- oder sec-Butoxycarbonyl, Methoxyethoxycarbonyl, Ethoxyethoxycarbonyl, n- oder i-Propoxyethoxycarbonyl oder n-, i- oder, sec-Butoxyethoxycarbonyl.

Reste $R^7$ sind beispielswiese Chlor, Brom, 4-Chlorphenyl, Methyl, Ethyl, Benzyl, Phenylethyl, Methoxy, Ethoxy, 2-Methoxyethoxy, 2-Butoxyethoxy, Benzyloxy, Methoxycarbonyl, Methylamino, Ethylamino, Dimethylamino, Methyl-ethylamino, Methylthio, Acetylamino, Propionylamino oder Methoxycarbonylmethyl.

Die Herstellung der Verbindungen der Formel I kann nach an sich bekannten Methoden erfolgen.

Beispielsweise werden Disazothiophenfarbstoffe der Formel I durch Kupplung eines diazotierten Amins der Formel II

$D$-$NH_2$(II),

in der D die obengenannte Bedeutung besitzt, auf ein Aminothiophen der Formel III

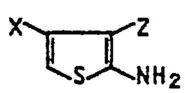

(III),

in der X und Z jeweils die obengenannte Bedeutung besitzen, und erneutes Diazotieren des erhaltenen Farbstoffs der Formel IV

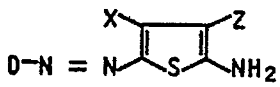

(IV),

in der D, X und Z jeweils die obengenannte Bedeutung besitzen, und Kuppeln auf eine Kupplungskomponente der Formel V

H–K (V),

wobei K die obengenannte Bedeutung besitzt, erhalten.

Die Aminothiophene der Formel III sind aus den älteren Anmeldungen DE-A 3 507 421 und DE-A 3 535 134 bekannt oder lassen sich nach den dort beschriebenen Methoden oder nach anderen an sich bekannten Verfahren herstellen.

Darüberhinaus können durch Austausch des Halogens in Farbstoffen der Formel IV

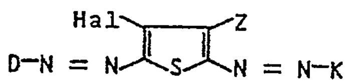

(VI),

in der D, Z und K jeweils die obengenannte Bedetung besitzen und Hal für Halogen steht, gegen entsprechende Reste Y, beispielsweise Phenylthio oder Phenylsulfonyl, weitere erfindungsgemäße Farbstoffe hergestellt werden.

Weitere Einzelheiten zur Herstellung der erfindungsgemäßen Disazothiophenfarbstoffe können den Beispielen entnommen werden.

in ausgefärbtem Zustand zeigen die neuen Disazothiophenfarbstoffe der Formel I rote bis türkisfarbene Farbtöne. Sie eignen sich zum Färben von synthetischen Fasern, z.B. von Polyestern, Polyamiden, Celluloseestern oder MIschgeweben aus Polyestern und Cellulosefasern. Man erhält Färbungen mit in der Regel guten bis sehr guten Echtheiten, insbesondere auf Polyestern.

Bei geeigneter Konstitution sind die Farbstoffe auch alkalisch und/oder reduktiv nach an sich bekannten Verfahren ätzbar.

Aus der FR-A 2 313 431 ist ebenfalls ein Disazofarbstoff bekannt, der einen Thiophenrest aufweist. Es hat sich jedoch gezeigt, daß dieser Farbstoff Mängel in seinen anwendungstechnischen Eigenschaften aufweist.

Von besonderer Bedeutung sind Disazothiophenfarbstoffe der Formel I, in der

X Chlor, Brom, Hydroxy, Mercapto, $C_1$-$C_4$-Alkoxy, das gegebenenfalls durch Phenyl substituiert ist, $C_5$-$C_7$-Cycloalkoxy, gegebenenfalls substituiertes Phenoxy, $C_1$-$C_4$-Alkylthio, das gegebenenfalls durch Phenyl substituiert ist, $C_5$-$C_7$-Cycloalkylthio, gegebenenfalls substituiertes Phenylthio oder den Rest $SO_2$-E, wobei E für Methyl, Ethyl oder Phenyl steht.
Z Cyano oder $C_1$-$C_8$-Alkoxycarbonyl, dessen Alkylkette gegebenenfalls durch ein oder mehrere Sauerstoffatome unterbrochen ist,
D den Rest einer Diazokomponente der Benzol-, Thiophen- oder Isothiazolreihe und
K den Rest einer Kupplungskomponente der Anilin- oder Pyridinreihe bedeuten.

Technisch besonders wertvoll sind Verbindungen der Formel I bei denen

X Chlor, Ethoxy, Phenylsulfonyl oder Phenylmercapto,
Z Cyano,
D den Rest einer Diazokomponente der Benzolreihe und
K den Rest einer Kupplungskomponente der Anilinreihe bedeuten.

Die folgenden Beispiele sollen die Erfindung näher erläutern. In ihnen beziehen sich die Angaben über Teile und Prozente, sofern nicht anders vermerkt, auf das Gewicht.

Beispiel 1

9,3 Teile Anilin wurden in 50 Teilen Wasser, 70 Volumenteilen 5 n Salzsäure und 100 Teilen Eis gerührt, auf 0 °C abgekühlt und tropfenweise mit einer Lösung von 7,6 Teilen $NaNO_2$ in 33 Teilen Wasser versetzt. Nach ca. 1 Stunde bei 0-5°C und nach Zersetzen des Nitritüberschußes mit Amidosulfonsäure, wurde die Diazoniumsalzlösung langsam zu einer Suspension von 16,6 Teilen 2-Amino-4-chlor-3-cyanothiophen in 500 Volumenteilen Methanol und 500 Teilen Eis gegeben. Der ausgefallene Farbstoff der Formel

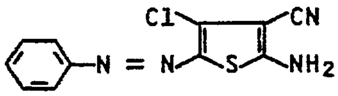

wurde nach ca. 5 Stunden bei 0-5°C abgesaugt, mit Wasser neutral gewaschen und bei 50°C unter vermindertem Druck getrocknet. Man erhielt 20 Teile Farbstoff.

3,9 Teile dieses Farbstoffs wurden in 34 Volumenteilen 85 %iger Phosphorsäure und 34 Volumenteilen Eisessig gelöst. Die Lösung wurde auf 0°C abgekühlt und mit 4,95 Teilen 40 %iger Nitrosylschwefelsäure versetzt. Man ließ 1 Stunde bei 0°C rühren und tropfte die Diazoniumsalzlösung langsam zu einer Lösung von 3,2 Teilen N-Butyl-(N-2-cyanoethyl)anilin in 60 Volumenteilen Methanol unter Zugabe von ca. 100 Teilen Eis und 0,2 Teilen Amidosulfonsäure. Der ausgefallene Farbstoff der Formel

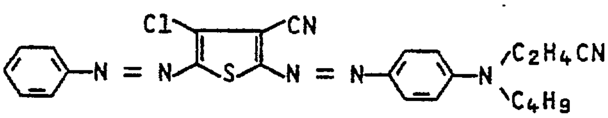

wurde nach 2 Stunden agbesaugt, neutral gewaschen und getrocknet. Man erhielt 6,2 Teile Farbstoff, der Polyestergewebe in echten, marineblauen Tönen färbt.

Beispiel 2

13 Teile 4-Chloranilin wurden in 80 Teilen Wasser und 30 Volumenteilen konz. Salzsäure gelöst, mit 100 Teilen Eis versetzt und auf 0°C abgekühlt Man versetzte tropfenweise mit 7,6 Teilen $NaNO_2$, gelöst in 33 Teilen Wasser, rührte 3 Stunden bei 0-5°C und zerstört den Nitritüberschuß mit Amidosulfonsäure. Die Diazoniumlösung wurde langsam zu einer Suspension von 16,6 Teilen 2-Amino-4-chlor-3-cyanothiophen in 500 Volumenteilen Methanol und 500 Teilen Eis gegeben. Der ausgefallene Farbstoff der Formel

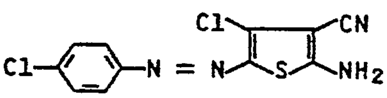

wurde nach ca. 6 Stunden bei 0-5°C abgesaugt, neutral gewaschen und getrocknet (23,2 Teile).

4,45 Teile dieses Farbstoffs wurden in 34 Volumenteilen 85 %iger Phosphorsäure und 34 Volumenteilen Eisessig gelöst. Die Lösung wurde auf 0°C abgekühlt und mit 4,95 Teilen 40 %iger Nitrosylschwefelsäure versetzt. Man ließ 1 Stunde bei 0°C rühren und tropfte die Diazoniumsalzlösung langsam zu einer Lösung von 2,8 Teilen (N-2-Cyanoethyl)-N-ethylanilin in 60 Volumenteilen Methanol unter Zugabe von ca. 100 Teilen Eis und 0.2 Teilen Amidosulfonsäure. Der ausgefallene Farbstoff der Formel

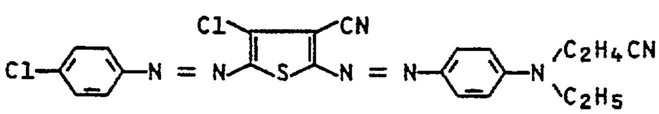

wurde nach ca. 3 Stunden abgesaugt, neutral gewaschen und getrocknet. Man erhielt 4,9 Teile Farbstoff, der Polyestergewebe in echten, blauen Tönen färbt.

In der folgenden Tabelle 1 sind weitere erfindungsgemäße Farbstoffe, die analog den obigen Beispielen erhalten werden, angegeben. Die Farbstoffe der Tabelle 1 entsprechen, wie auch die Farbstoffe der nachfolgenden Tabellen 2 und 3 jeweils der Formel

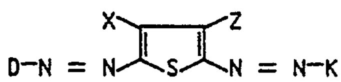

Tabelle 1

| Bsp. | D− | X | Z | −K | Nuance auf PES |
|---|---|---|---|---|---|
| 3 | 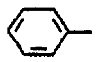 | Cl | CN | 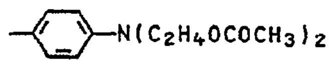 | marine-blau |
| 4 | 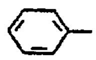 | Cl | CN | 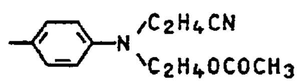 | marine-blau |
| 5 | 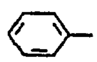 | Cl | CN | 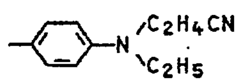 | marine-blau |
| 6 | 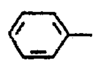 | Cl | CN | 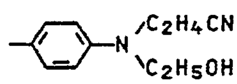 | marine-blau |
| 7 | 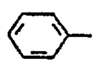 | Cl | CN | 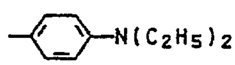 | blau |
| 8 | 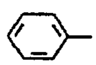 | Cl | CN | 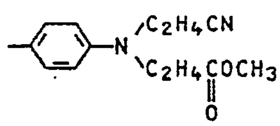 | marine-blau |
| 9 | 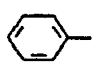 | Cl | CN | 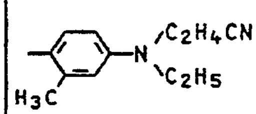 | blau |
| 10 | 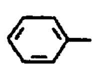 | Cl | CN | 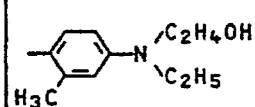 | blau |
| 11 | 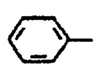 | Cl | CN | 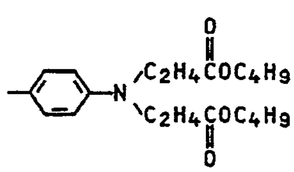 | marine-blau |

Tabelle 1 (Forts.)

| Bsp. | D– | X | Z | –K | Nuance auf PES |
|---|---|---|---|---|---|
| 12 | 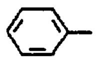 | Cl | CN | 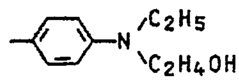 | marine-blau |
| 13 | 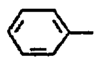 | Cl | CN | 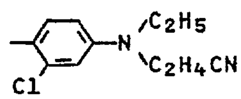 | marine-blau |
| 14 | 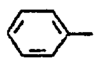 | Cl | CN | 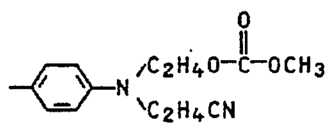 | marine-blau |
| 15 | 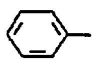 | Cl | CN | 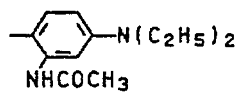 | blau |
| 16 | 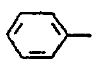 | Cl | CN | 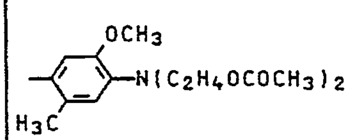 | blau |
| 17 | 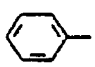 | Cl | CN | 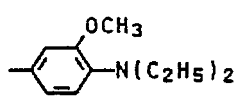 | blau |
| 18 | 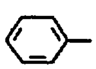 | Cl | CN | 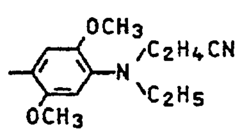 | blau |
| 19 | 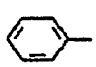 | Cl | CN | 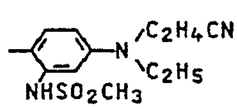 | blau |

Tabelle 1 (Forts.)

| Bsp. | D– | X | Z | –K | Nuance auf PES |
|---|---|---|---|---|---|
| 20 | 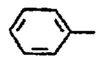 | Cl | CN | 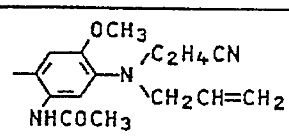 | grün-stichig blau |
| 21 | 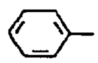 | Cl | CN | 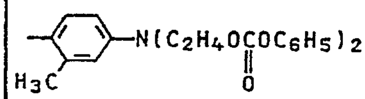 | blau |
| 22 | 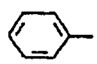 | Cl | CN | 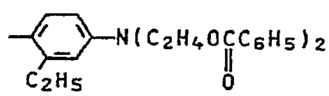 | blau |
| 23 | 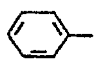 | Cl | CN | 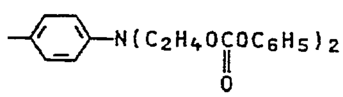 | blau |
| 24 | 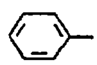 | Cl | CN | 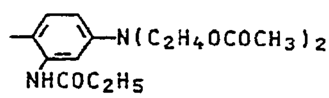 | blau |
| 25 | 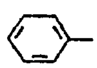 | Cl | CN | 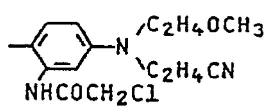 | blau |
| 26 | 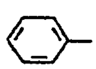 | Cl | CN | 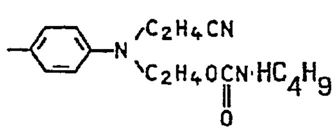 | marine-blau |
| 27 | 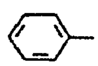 | Cl | CN | 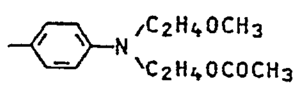 | blau |

Tabelle 1 (Forts.)

| Bsp. | D− | X | Z | −K | Nuance auf PES |
|---|---|---|---|---|---|
| 28 | 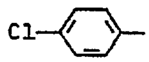 | Cl | CN | 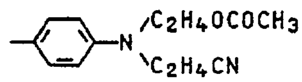 | marine-blau |
| 29 | 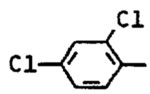 | Cl | CN | 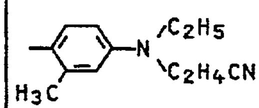 | blau |
| 30 | 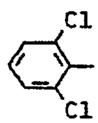 | Cl | CN | 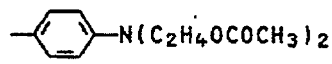 | blau |
| 31 | 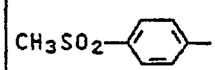 | Cl | CN | 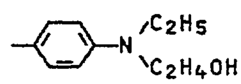 | blau |
| 32 | 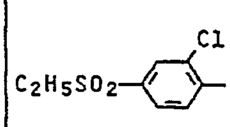 | Cl | CN | 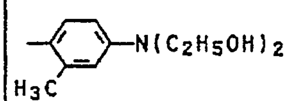 | blau |
| 33 | 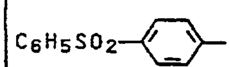 | Cl | CN | 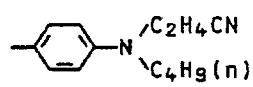 | blau |
| 34 | 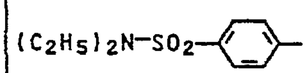 | Cl | CN | 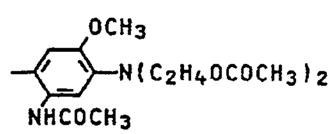 | blau-grün |
| 35 | 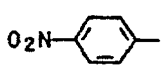 | Cl | CN | 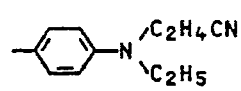 | grün |
| 36 | 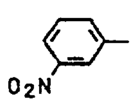 | Cl | CN | 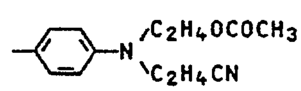 | blau-grün |

Tabelle 1 (Forts.)

| Bsp. | D– | X | Z | –K | Nuance auf PES |
|---|---|---|---|---|---|
| 37 | 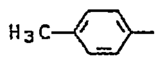 | Cl | CN | 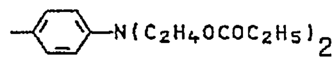 | blau |
| 38 | 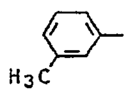 | Cl | CN | 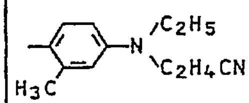 | blau |
| 39 | 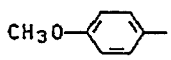 | Cl | CN | 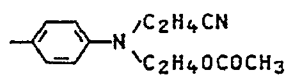 | blau |
| 40 | 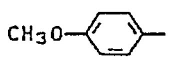 | Cl | CN | 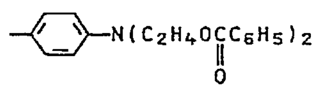 | blau |
| 41 | 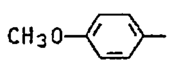 | Cl | CN | 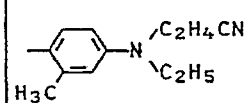 | blau |
| 42 | 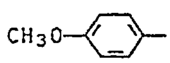 | Cl | CN | 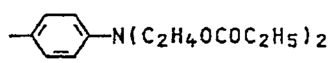 | blau |
| 43 | 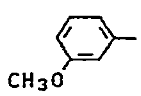 | Cl | CN | 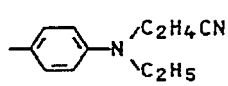 | blau |
| 44 | 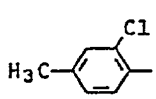 | Cl | CN | 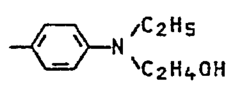 | blau |
| 45 | 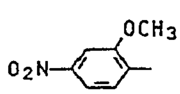 | Cl | CN | 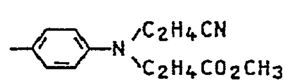 | blau-grün |

Tabelle 1 (Forts.)

| Bsp. | D— | X | Z | —K | Nuance auf PES |
|---|---|---|---|---|---|
| 46 | 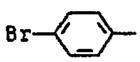 | Cl | CN | 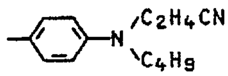 | blau |
| 47 | 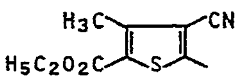 | Cl | CN | 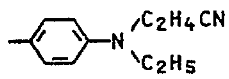 | grün |
| 48 | 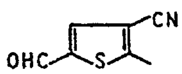 | Cl | CN | 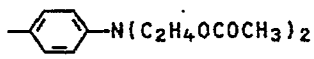 | grün |
| 49 | 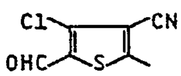 | Cl | CN | 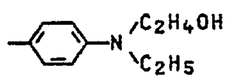 | grün |
| 50 | 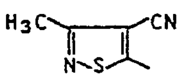 | Cl | CN | 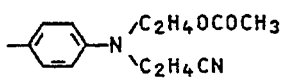 | blau-grün |
| 51 | 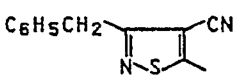 | Cl | CN | 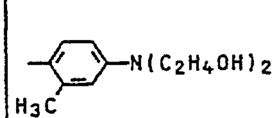 | grün |
| 52 | 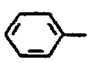 | Br | CN | 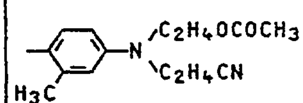 | blau |
| 53 | 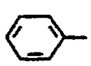 | Cl | CN | 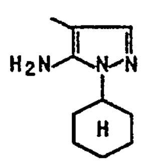 | rot |
| 54 | 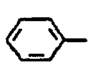 | Cl | CN | 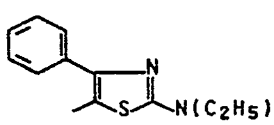 | grün |

Tabelle 1 (Forts.)

| Bsp. | D— | X | Z | —K | Nuance auf PES |
|---|---|---|---|---|---|
| 55 | 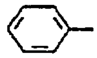 | Cl | CN | 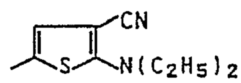 | blau-grün |
| 56 | 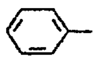 | Cl | CN | 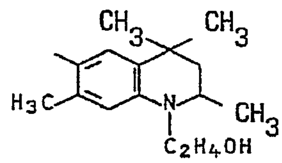 | grün |
| 57 | 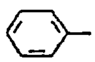 | Cl | CN | 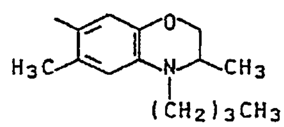 | grün |
| 58 | 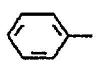 | Cl | CN | 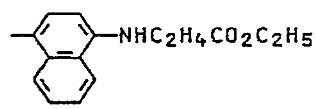 | grün |
| 59 | 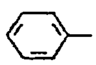 | Cl | CN | 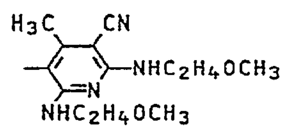 | rotst. blau |
| 60 | 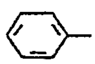 | Cl | $CO_2C_2H_5$ | 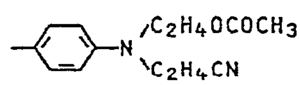 | marine-blau |
| 61 | 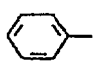 | Cl | $CO_2C_4H_9$ | 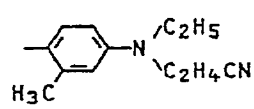 | marine-blau |
| 62 | 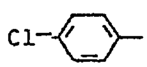 | Cl | $CO_2C_2H_5$ | 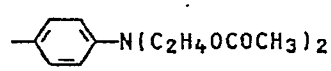 | blau |
| 63 | 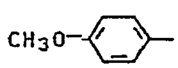 | Cl | $CO_2CH_3$ | 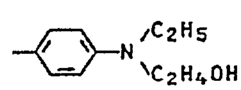 | marine-blau |

Tabelle 1 (Forts.)

| Bsp. | D– | X | Z | –K | Nuance auf PES |
|---|---|---|---|---|---|
| 64 | 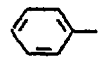 | Cl | CN | 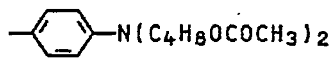 | blau |
| 65 | 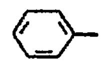 | Cl | CN | 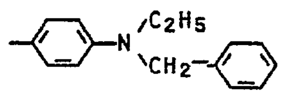 | blau |
| 66 | 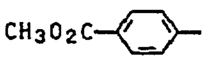 | Cl | CN | 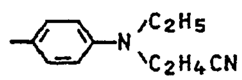 | blau |

<u>Beispiel 67</u>

7,05 Teile 4-Nitroanilin wurden in 50 Volumenteilen Eisessig/Propionsäure (3/1 verrührt, bei 15-20°C mit 60 Volumenteilen konz. Schwefelsäure versetzt und auf 0°C abgekühlt. Dann wurden langsam 16,5 Teile 40 %ige Nitrosylschwefelsäure zugetropft und die Lösung wurde 4 Stunden bei 0-5°C gerührt.

Zu dieser Diazoniumsalzlösung wurden bei ca. 10°C 9,8 Teile 2-Amino-3-cyano-4-ethoxythiophen, suspendiert in 150 Volumenteilen Eisessig, getropft. Danach wurde 1 Teil Amidosulfonsäure zugegeben und die Reaktionslösung mit Eiswasser auf 2000 Volumenteile verdünnt. Bei 0-5°C wurde mit ca. 38 Teilen Natriumhydroxyd in 100 Teilen Wasser der pH-Wert auf 3,5 gestellt. Nach 4 Stunden wurde der ausgefallene Farbstoff der Formel

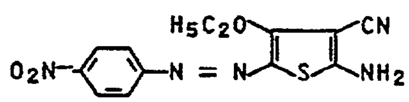

abgesaugt, gewaschen und getrocknet (14,9 Teile).

4,75 Teile dieses Farbstoffs wurden in 34 Volumenteilen 85 %iger Phosphorsäure und 34 Volumenteilen Eisessig gelöst. Die Lösung wurde auf 0°C gekühlt und langsam mit 4,95 Teilen 40 %iger Nitrosylschwefelsäure versetzt.

Man ließ 1 Stunde bei 0°C rühren und tropfte anschließend diese Diazoniumsalzlösung langsam zu einer Lösung von 3,2 Teilen N-Butyl-(N-2-cyanoethyl)anilin in 60 Volumenteilen Methanol unter Zugabe von ca. 100 Teilen Eis und 0.2 Teilen Amidosulfonsäure. Der ausgefallene Farbstoff der Formel

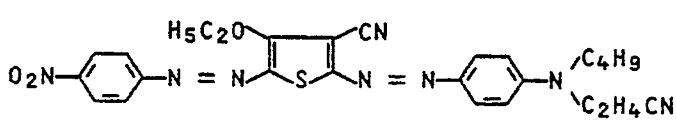

wurde abgesaugt, gewaschen und getrocknet. Man erhielt 6,1 Teile Farbstoff, der Polyestergewebe in echten, blaugrünen Tönen färbt.

In der folgenden Tabelle 2 sind weitere erfindungsgemäße Farbstoffe, die analog dem obigen Beispiel erhalten werden, angegeben.

Tabelle 2

| Bsp. | D– | X | Z | –K | Nuance auf PES |
|---|---|---|---|---|---|
| 68 | 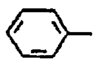 | $OC_2H_5$ | CN | 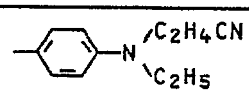 | marine-blau |
| 69 | 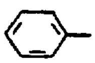 | $OC_2H_5$ | CN | 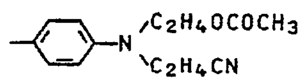 | marine-blau |
| 70 | 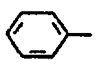 | $OC_2H_5$ | CN | 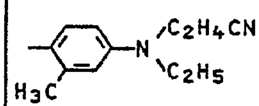 | blau |
| 71 | 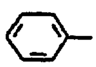 | $OC_2H_5$ | CN | 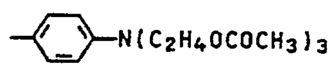 | marine-blau |
| 72 | 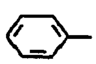 | $OC_2H_5$ | CN | 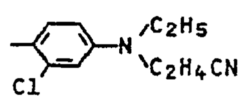 | marine-blau |

Tabelle 2 (Forts.)

| Bsp. | D− | X | Z | −K | Nuance auf PES |
|---|---|---|---|---|---|
| 73 | 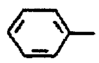 | $OC_2H_5$ | CN | 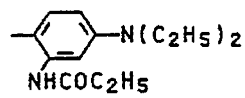 | blau |
| 74 | 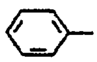 | $OC_2H_5$ | CN | 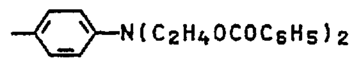 | blau |
| 75 | 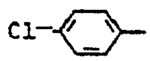 | $OC_2H_5$ | CN | 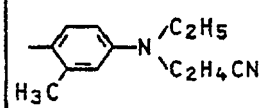 | blau |
| 76 | 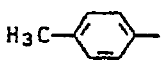 | $OC_2H_5$ | CN | 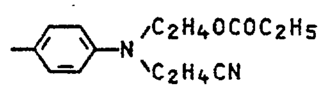 | blau |
| 77 | 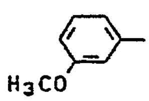 | $OC_2H_5$ | CN | 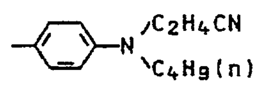 | blau |
| 78 | 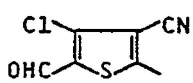 | $OC_2H_5$ | CN | 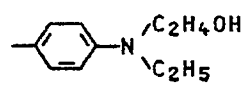 | grün |
| 79 | 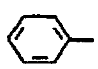 | $C_6H_5S$ | CN | 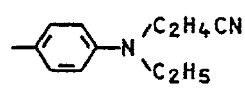 | blau |
| 80 | 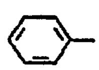 | $C_6H_5S$ | CN | 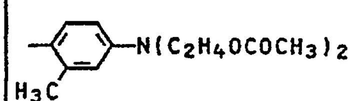 | blau |
| 81 | 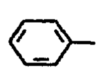 | $C_6H_5S$ | CN | 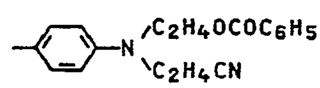 | blau |

Tabelle 2 (Forts.)

| Bsp. | D– | X | Z | –K | Nuance auf PES |
|---|---|---|---|---|---|
| 82 | 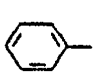 | $C_6H_5-SO_2$ | CN | 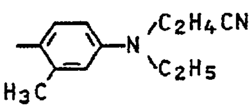 | blau |

Beispiel 83

1,2 Teile des in Beispiel 1 beschriebenen Disazofarbstoffs wurden in 25 Volumenteilen N,N-Dimethylformamid mit 0,62 Teilen Natrium-phenylsulfinat versetzt und 12 Stunden bei 25°C gerührt. Die Reaktionsmischung wurde auf 300 Teile Wasser gegeben, der Farbstoff der Formel

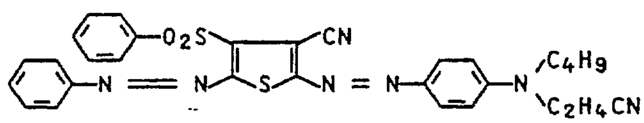

mit NaCl ausgesalzen, abgesaugt, gewaschen und getrocknet. Man erhielt 1,4 Teile Farbstoff, der Polyesterfasern in echten, blauen Tönen färbt.

Beispiel 84

1,2 Teile des in Beispiel 1 beschriebenen Disazofarbstoffs wurden in 25 Volumenteilen N,N-Dimethylformamid mit 0,41 Teilen Thiophenol und 0,7 Volumenteilen 30 %iger methanolischer Natriummethylatlösung versetzt und 24 Stunden bei 25°C gerührt. Die Reaktionsmischung wurde auf 300 Teile Wasser gegeben, der Farbstoff der Formel

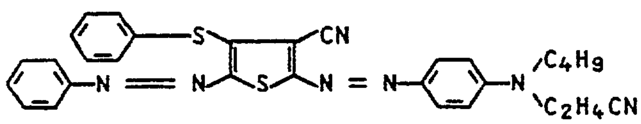

mit NaCl ausgesalzen, abgesaugt, gewaschen und getrocknet. Man erhielt 1,3 Teile Farbstoff, der Polyesterfasern in echten, blauen Tönen färbt.

In der folgenden Tabelle 3 sind weitere erfindungsgemäße Farbstoffe, die analog den obigen Beispielen erhalten werden, angegeben.

Tabelle 3

| Bsp. | D– | X | Z | –K | Nuance auf PES |
|---|---|---|---|---|---|
| 85 | 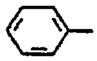 | $C_6H_5-SO_2$ | CN | 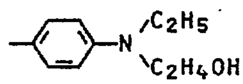 | blau |
| 86 | 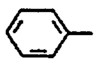 | $C_6H_5-SO_2$ | CN | 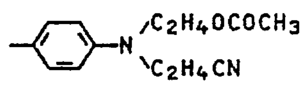 | blau |
| 87 | 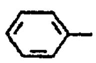 | $C_6H_5-SO_2$ | CN | 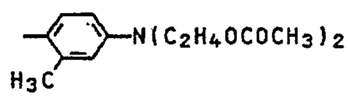 | blau |
| 88 | 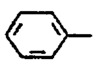 | $C_6H_5-SO_2$ | CN | 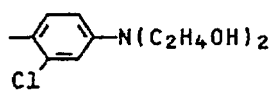 | blau |
| 89 | 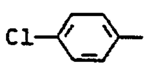 | $C_6H_5-SO_2$ | CN | 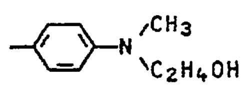 | blau |
| 90 | 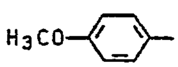 | $C_6H_5-SO_2$ | CN | 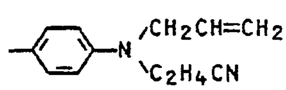 | blau |
| 91 | 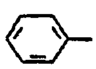 | $C_6H_5S$ | CN | 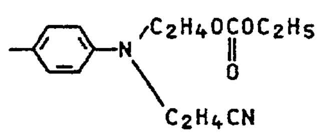 | blau |
| 92 | 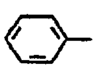 | $C_6H_5S$ | CN | 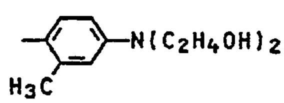 | blau |
| 93 | 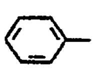 | $C_6H_5S$ | CN | 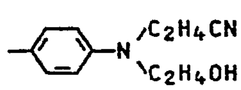 | blau |

Tabelle 3 (Forts.)

| Bsp. | D— | X | Z | —K | Nuan auf |
|---|---|---|---|---|---|
| 94 | 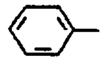 | $C_6H_5S$ | CN | 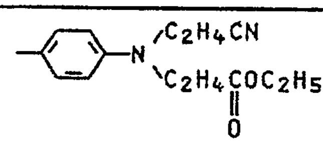 | blau |
| 95 | 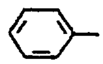 | $CH_3S$ | CN | 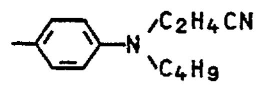 | blau |
| 96 | 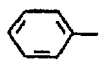 | $C_2H_5S$ | CN | 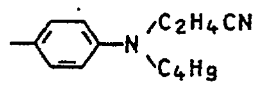 | blau |
| 97 | 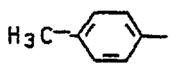 | $C_6H_5S$ | CN | 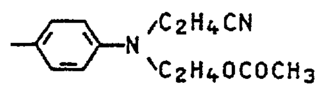 | blau |
| 98 | 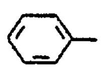 | $C_6H_5O$ | CN | 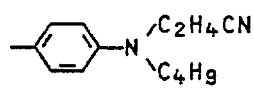 | blau |
| 99 | 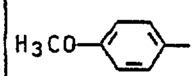 | $C_6H_5S$ | CN | 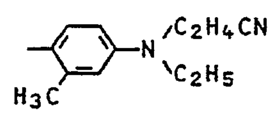 | blau |

## Patentansprüche

1. Disazothiophenfarbstoffe der Formel I

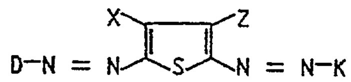

(I),

in der
X Fluor, Chlor, Brom, Hydroxy, Mercapto, $C_1$–$C_4$-Alkoxy, das gegebenenfalls durch Phenyl substituiert ist, $C_5$–$C_7$-Cycloalkoxy, gegebenenfalls substituiertes Phenoxy, $C_1$–$C_4$-Alkylthio, das gegebenenfalls durch Phenyl substituiert ist, $C_5$–$C_7$-Cycloalkylthio, gegebenenfalls substituiertes Phenylthio oder den Rest $SO_2$-E, wobei E für gegebenenfals durch Phenyl substituiertes $C_1$–$C_8$-Alkyl, $C_3$–$C_4$-Alkenyl, $C_5$–$C_7$-Cycloalkyl, gegebenenfalls substituiertes Phenyl, Hydroxy, $C_1$–$C_4$-Alkoxy, das gegebenenfalls durch Phenyl substituiert ist, gegebenenfalls substituiertes Phenoxy, Amino, $C_1$–$C_4$-Mono- oder Dialkylamino oder gegebenenfalls substituiertes Phenylamino steht,
Z Cyano, Nitro, $C_1$–$C_8$-Alkanoyl, gegebenenfalls substituiertes Benzoyl, $C_1$–$C_4$-Alkylsulfonyl, gegebenenfalls substituiertes Phenylsulfonyl, Carboxyl, $C_1$–$C_8$-Alkoxycarbonyl, dessen Alkylkette gegebenenfalls durch ein oder mehrere Sauerstoffatome unterbrochen ist, gegebenenfalls substituiertes Phenoxycarbonyl, Carbamoyl, $C_1$–$C_8$-Mono- oder Dialkylcarbamoyl, Pyrrolidinocarbonyl, Piperidinocarbonyl, Morpholinocarbonyl, Piperazinocarbonyl oder (N-$C_1$–$C_4$-Alkyl)piperazinocarbonyl,
D den Rest einer Diazokomponente und
K den Rest einer Kupplungskomponente bedeuten.

2. Disazothiophenfarbstoffe gemäß Anspruch 1, in denen D sich von einer Diazokomponente der Formel

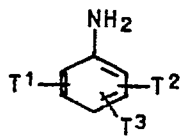 , 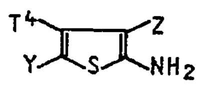 oder 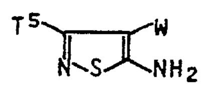

ableitet, wobei
$T^1$ und $T^2$ Wasserstoff, Chlor, Brom, Cyano, $CF_3$, Nitro, $C_1$-$C_4$-Alkyl, $C_1$-$C_4$-Alkoxy, Phenoxy, Phenyl, $C_1$-$C_4$-Alkylcarbonyl, $C_1$-$C_4$-Alkoxycarbonyl, $C_1$-$C_4$-Alkylsulfonyl, gegebenenfalls substituiertes Phenylsulfonyl, Benzylsulfonyl, Carboxyl, Carbamoyl, $C_1$-$C_4$-Mono- oder Dialkylcarbamoyl, das gegebenenfalls durch Hydroxy substituiert ist, Sulfamoyl oder $C_1$-$C_4$-Mono- oder Dialkylsulfamoyl, das gegebenenfalls durch Hydroxy substituiert ist.
$T^3$ Wasserstoff, Chlor, Brom, $C_1$-$C_4$-Alkyl oder Cyano,
$T^4$ Wasserstoff, $C_1$-$C_4$-Alkyl, gegebenenfalls substituiertes Phenyl, Thienyl, Furyl, Halogen, $C_1$-$C_4$-Alkylsulfonyl, gegebenenfalls substituiertes Phenylsulfonyl, $C_1$-$C_4$-Alkoxy, Phenoxy, gegebenenfalls substituiertes $C_1$-$C_4$-Alkylthio oder Phenylthio,
$T^5$ jeweils gegebenenfalls substituiertes $C_1$-$C_4$-Alkyl oder Phenyl,
Y Wasserstoff, $C_1$-$C_4$-Alkyl, gegebenenfalls substituiertes Phenyl, Chlor, Brom, Nitro, Cyano, $C_1$-$C_4$-Alkanoyl, Benzoyl, $C_1$-$C_4$-Alkoxycarbonyl, $C_1$-$C_4$-Alkyl- oder Phenylsulfonyl und
W Cyano, Nitro, $C_1$-$C_4$-Alkoxycarbonyl, Phenoxycarbonyl, Chlor oder Brom bedeuten und
Z die in Anspruch 1 genannte Bedeutung besitzt.

3. Disazothiophenfarbstoffe gemäß Anspruch 1, in denen K sich von einer Kupplungskomponente der Formel

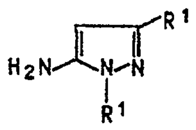, 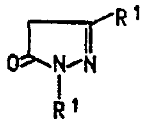, 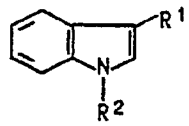, 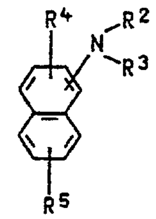, 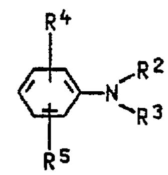,

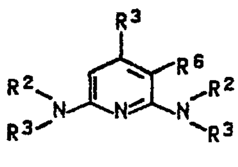, 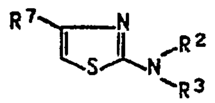, 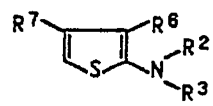 oder 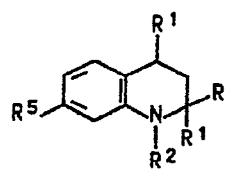

ableitet, wobei

$R^1$ Wasserstoff, $C_1$-$C_4$-Alkyl, das gegebenenfalls durch Phenyl substituiert ist, oder gegebenenfalls substituiertes Phenyl,

$R^2$ Wasserstoff oder $R^3$,

$R^3$ gegebenenfalls substituiertes $C_1$-$C_6$-Alkyl, $C_5$-$C_7$-Cycloalkyl, $C_3$-$C_4$-Alkenyl oder gegebenenfalls substituiertes Phenyl,

$R^4$ und $R^5$ unabhängig voneinander Wasserstoff, $C_1$-$C_4$-Alkyl, $C_1$-$C_4$-Alkoxy, Phenoxy, Benzyloxy, Halogen, $C_1$-$C_4$-Alkylsulfonylamino, $C_1$-$C_4$-Dialkylaminosulfonylamino oder jeweils gegebenenfalls substituiertes $C_1$-$C_4$-Alkoxycarbonylamino, Benzoylamino oder $C_1$-$C_6$-Alkanoylamino,

$R^6$ Cyano, Carbamoyl, $C_1$-$C_4$-Mono- oder Dialkylcarbamoyl, Nitro oder $C_1$-$C_8$-Alkoxycarbonyl, dessen Alkylkette gegebenenfalls durch ein oder mehrere Sauerstoffatome unterbrochen ist, und

$R^7$ Halogen, gegebenenfalls substituiertes Phenyl, $C_1$-$C_{10}$-Alkyl oder $C_1$-$C_{10}$-Alkoxy, das jeweils gegebenenfalls durch Phenyl substituiert ist und/oder deren Alkylkette jeweils gegebenenfalls durch ein oder mehrere Sauerstoffatome unterbrochen ist, Phenoxy, Nitro, $C_1$-$C_4$-Alkoxycarbonyl, $C_1$-$C_4$-Mono- oder Dialkylamino, $C_1$-$C_4$-Alkylthio, Phenylthio, $C_1$-$C_5$-Alkanoylamino, $C_1$-$C_4$-Alkoxycarbonylmethyl oder Cyanomethyl bedeuten.

4. Disazothiophenfarbstoffe gemäß Anspruch 1, dadurch gekennzeichnet, daß

X Chlor, Brom, Hydroxy, Mercapto, $C_1$-$C_4$-Alkoxy, das gegebenenfalls durch Phenyl substituiert ist, $C_5$-$C_7$-Cycloalkoxy, gegebenenfalls substituiertes Phenoxy, $C_1$-$C_4$-Alkylthio, das gegebenenfalls durch Phenyl substituiert ist, $C_5$-$C_7$-Cycloalkylthio, gegebenenfalls substituiertes Phenylthio oder den Rest $SO_2$-E, wobei E für Methyl, Ethyl oder Phenyl steht,

Z Cyano oder $C_1$-$C_8$-Alkoxycarbonyl, dessen Alkylkette gegebenenfalls durch ein oder mehrere Sauerstoffatome unterbrochen ist,

D den Rest einer Diazokomponente der Benzol-, Thiophen- oder Isothiazolreihe und

K den Rest einer Kupplungskomponente der Anilin- oder Pyridinreihe bedeuten.

5. Verwendung der Disazothiophenfarbstoffe gemäß Anspruch 1 zum Färben synthetischer Fasern.

## Claims

1. A disazothiophene dye of the formula I

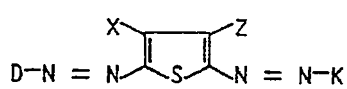 (I),

where

X is fluorine, chlorine, bromine, hydroxyl, mercapto, $C_1$–$C_4$-alkoxy which may be phenyl-substituted, $C_5$–$C_7$-cycloalkoxy, substituted or unsubstituted phenoxy, $C_1$–$C_4$-alkylthio which may be phenyl-substituted, $C_5$–$C_7$-cycloalkylthio, substituted or unsubstituted phenylthio, or $SO_2$-E, where E is unsubstituted or phenyl-substituted $C_1$–$C_8$-alkyl, $C_3$–$C_4$-alkenyl, $C_5$–$C_7$-cycloalkyl, substituted or unsubstituted phenyl, hydroxyl, $C_1$–$C_4$-alkoxy which may be phenyl-substituted, substituted or unsubstituted phenoxy, amino, $C_1$–$C_4$-monoalkylamino or -dialkylamino or substituted or unsubstituted phenylamino,

Z is cyano, nitro, $C_1$–$C_8$-alkanoyl, substituted or unsubstituted benzoyl, $C_1$–$C_4$-alkylsulfonyl, substituted or unsubstituted phenylsulfonyl, carboxyl, or $C_1$–$C_8$-alkoxycarbonyl whose alkyl chain may be interrupted by one or more oxygen atoms, or is substituted or unsubstituted phenoxycarbonyl, carbamoyl, $C_1$–$C_8$-monoalkylcarbamoyl or -dialkylcarbamoyl, pyrrolidinocarbonyl, piperidinocarbonyl, morpholinocarbonyl, piperazinocarbonyl or (N-$C_1$–$C_4$-alkyl)piperazinocarbonyl,

D is the radical of a diazo component, and
K is the radical of a coupling component.

2. A disazothiophene dye as claimed in claim 1, where D is derived from a diazo component of the formula

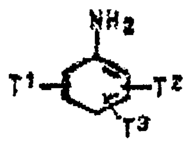
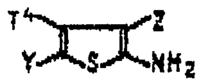
or
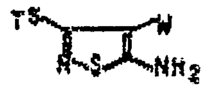

where
$T^1$ and $T^2$ are each hydrogen, chlorine, bromine, cyano, $CF_3$, nitro, $C_1$–$C_4$-alkyl, $C_1$–$C_4$-alkoxy, phenoxy, phenyl, $C_1$–$C_4$-alkylcarbonyl, $C_1$–$C_4$-alkoxycarbonyl, $C_1$–$C_4$-alkylsulfonyl, substituted or unsubstituted phenylsulfonyl, benzylsulfonyl, carboxyl, carbamoyl, $C_1$–$C_4$-monoalkylcarbamoyl or -dialkylcarbamoyl which may be substituted by hydroxyl, or is sulfamoyl or $C_1$–$C_4$-monoalkylsulfamoyl or -dialkylsulfamoyl which may be substituted by hydroxyl,
$T^3$ is hydrogen, chlorine, bromine, $C_1$–$C_4$-alkyl or cyano,
$T^4$ is hydrogen, $C_1$–$C_4$-alkyl, substituted or unsubstituted phenyl, thienyl, furyl, halogen, $C_1$–$C_4$-alkylsulfonyl, substituted or unsubstituted phenylsulfonyl, $C_1$–$C_4$-alkoxy, phenoxy, substituted or unsubstituted $C_1$–$C_4$-alkylthio or phenylthio,
$T^5$ is substituted or unsubstituted $C_1$–$C_4$-alkyl, or substituted or unsubstituted phenyl,
Y is hydrogen, $C_1$–$C_4$-alkyl, substituted or unsubstituted phenyl, chlorine, bromine, nitro, cyano, $C_1$–$C_4$-alkanoyl, benzoyl, $C_1$–$C_4$-alkoxycarbonyl, $C_1$–$C_4$-alkylsulfonyl or phenylsulfonyl, and
W is cyano, nitro, $C_1$–$C_4$-alkoxycarbonyl, phenoxycarbonyl, chlorine or bromine, and Z is as defined in claim 1.

3. A disazothiophene dye as claimed in claim 1, where K is derived from a coupling component of the formula

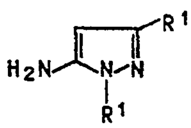
,
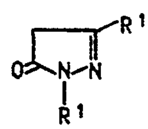
,
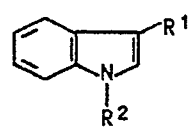
,
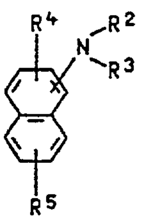
,
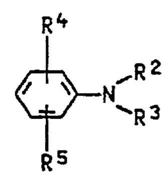
,
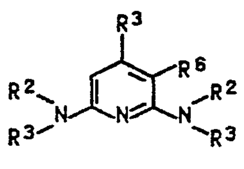
,
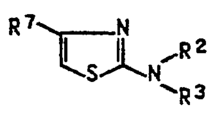
,
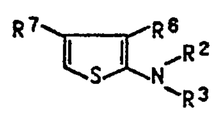
or
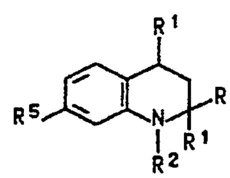

where
$R^1$ is hydrogen or $C_1$–$C_4$-alkyl which may be substituted by phenyl, or is substituted or unsubstituted phenyl,
$R^2$ is hydrogen or $R^3$,
$R^3$ is substituted or unsubstituted $C_1$–$C_5$-alkyl, $C_5$–$C_7$-cycloalkyl, $C_3$–$C_4$-alkenyl or substituted or unsubstituted phenyl,
$R^4$ and $R^5$ are each independently of the other hydrogen, $C_1$–$C_4$-alkyl, $C_1$–$C_4$-alkoxy, phenoxy, benzyloxy, halogen, $C_1$–$C_4$-alkyl-sulfonylamino, $C_1$–$C_4$-dialkylamino-sulfonylamino substituted or unsubstituted $C_1$–$C_4$-alkoxycarbonylamino, substituted or unsubstituted benzoylamino or substituted or unsubstituted $C_1$–$C_6$-alkanoylamino,
$R^6$ is cyano, carbamoyl, $C_1$–$C_4$-monoalkylcarbamoyl or -dialkylcarbamoyl, nitro or $C_1$–$C_8$-alkoxycarbonyl whose alkyl chain may be interrupted by one or more oxygen atoms, and
$R^7$ is halogen, substituted or unsubstituted phenyl or $C_1$–$C_{10}$-alkyl or $C_1$–$C_{10}$-alkoxy, which may each be substituted by phenyl and/or whose alkyl chains may each be interrupted by one or more oxygen atoms, or is phenoxy, nitro, $C_1$–$C_4$-alkoxycarbonyl, $C_1$–$C_4$-monoalkylamino or -dialkylamino, $C_1$–$C_4$-alkylthio, phenylthio, $C_1$–$C_5$-alkanoylamino, $C_1$–$C_4$-alkoxycarbonylmethyl or cyanomethyl.

4. A disazothiophene dye as claimed in claim 1, wherein X is chlorine, bromine, hydroxyl, mercapto or $C_1$–$C_4$-alkoxy which may be substituted by phenyl, or is $C_5$–$C_7$-cycloalkoxy, substituted or unsubstituted phenoxy or $C_1$–$C_4$-alkylthio which may be substituted by phenyl, or is $C_5$–$C_7$-cycloalkylthio, substituted or unsubstituted phenylthio, or $SO_2$-E, where E is methyl, ethyl or phenyl,
Z is cyano or $C_1$–$C_8$-alkoxycarbonyl whose alkyl chain may be interrupted by one or more oxygen atoms,
D is the radical of a diazo component of the benzene, thiophene or isothiazole series, and
K is the radical of a coupling component of the aniline or pyridine series.

5. The use of a disazothiophene dye as claimed in claim 1 for dyeing synthetic fibers.

**Revendications**

1. Colorants disazothiophéniques de la formule I

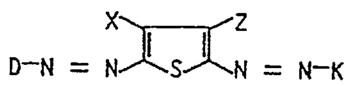

(I),

dans laquelle
X représente fluore, chlore, brome, hydroxy, mercapto, alcoxy en $C_1$–$C_4$ qui est éventuellement substitué par phényle, cycloalcoxy en $C_5$–$C_7$, phénoxy éventuellement substitué, alkylthio en $C_1$–$C_4$ qui est éventuellement substitué par phényle, cycloalkylthio en $C_5$–$C_7$, phénylthio éventuellement substituté ou le reste $SO_2$-E, E étant mis pour alkyle en $C_1$–$C_8$, alcényle en $C_3$–$C_4$, cycloalkyle en $C_5$–$C_7$ substitué éventuellement par phényle, hydroxy, alcoxy en $C_1$–$C_4$ qui est éventuellement substitué par phényle, phénoxy éventuellement substitué, amino, mono- ou dialkylamino en $C_1$–$C_4$ ou phénylamino éventuellement substitué,
Z représente cyano, nitro, alcanoyle en $C_1$–$C_8$, benzoyle éventuellement substitué, alkyle en $C_1$–$C_4$, sulfonyle, phénylsulfonyle éventuellement substitué, carboxyle, alcoxycarbonyle en $C_1$–$C_8$, dont la chaîne alkyle est éventuellement interrompue par un ou plusieurs atomes d'oxygène, phénoxycarbonyle éventuellement substitué, carbamoyle, mono- ou dialkyle en $C_1$–$C_8$ carbamoyle, pyrrolidinocarbonyle, pipéridinocarbonyle, morpholino-carbonyle, pipérazinocarbonyle ou (N-alkyle en $C_1$–$C_4$)pipérazinocarbonyle,
D représente le reste d'un composant diazoïque et
K le reste d'un composant de copulation.

2. Colorants disazothiophéniques selon la revendication 1, dans lesquels
D dérive d'un composant diazoïque de formule

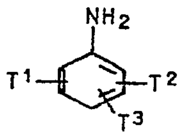

,

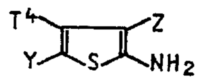

or

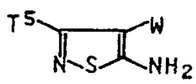

$T^1$ et $T^2$ représentant hydrogène, chlore, brome, cyano, $CF_3$, nitro, alkyle en $C_1$–$C_4$, alcoxy en $C_1$–$C_4$, phénoxy, phényle, alkyle en $C_1$–$C_4$ carbonyle, alcoxy en $C_1$–$C_4$ carbonyle, alkyl en $C_1$–$C_4$ sulfonyle, phénylsulfonyle éventuellement substitué, benzylsulfonyle, carboxyle, carbamoyle, mono- ou dialkyl en $C_1$–$C_4$-carbamoyle qui est éventuellement substitué par hydroxy, sulfamoyle ou mono- ou dialkyl en $C_1$–$C_4$ sulfamoyle qui est éventuellement substitué par hydroxy,
$T^3$ hydrogène, chlore, brome, alkyle en $C_1$–$C_4$ ou cyano,
$T^4$ hydrogène, alkyle en $C_1$–$C_4$, phényle éventuellement substitué, thiényle, furyle, halogène, alkyle en $C_1$–$C_4$ sulfonyle, phénylsulfonyle éventuellement substitué, alcoxy en $C_1$–$C_4$, phénoxy, alkyle en $C_1$–$C_4$ thio ou phénylthio éventuellement substitué,
$T^5$ chacun alkyle en $C_1$–$C_4$ éventuellement substitué ou phényle,
Y hydrogène, alkyle en $C_1$–$C_4$, phényle éventuellement substitué, chlore, brome, nitro, cyano, alcanoyle en $C_1$–$C_4$, benzoyle, alcoxy en $C_1$–$C_4$, carbonyle, alkyle en $C_1$–$C_4$ ou phénylsulfonyle et
W cyano, nitro, alcoxy en $C_1$–$C_4$ carbonyle, phénoxycarbonyle, chlore ou brome et
ayant la signification indiquée dans la revendication 1.

3. Colorants disazothiophéniques selon la revendication 1, dans lesquels
K dérive d'un composant de copulation de formule

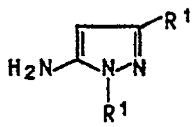, 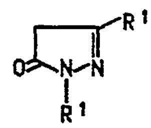, 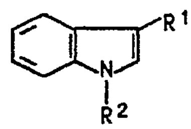, 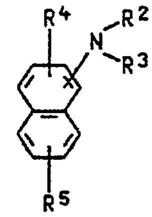, 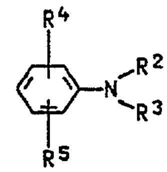,

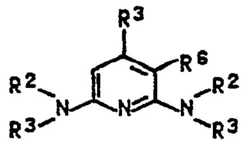, 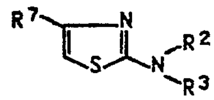, 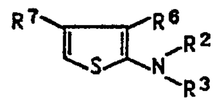 ou 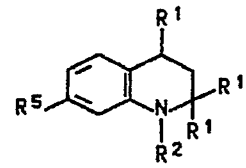

$R^1$ représentant hydrogène, alkyle en $C_1$–$C_4$ qui est éventuellement substitué par phényle ou phényle éventuellement substitué,
$R^2$ hydrogène ou $R^3$,
$R^3$ alkyle en $C_1$–$C_6$, cycloalkyle en $C_5$–$C_7$, alcényle en $C_3$–$C_4$ éventuellement substitué ou phényle éventuellement substitué,
$R^4$ et $R^5$ indépendamment l'un de l'autre, hydrogène, alkyle en $C_1$–$C_4$, alcoxy en $C_1$–$C_4$, phénoxy, benzyloxy, halogène, alkyl en $C_1$–$C_4$ sulfonylamino, dialkyl en $C_1$–$C_4$ aminosulfonylamino ou chacun alcoxy en $C_1$–$C_4$ carbonylamino éventuellement substitué, benzoylamino ou alcanoyl en $C_1$–$C_6$ amino,
$R^6$ cyano, carbamoyle, mono- ou dialkyle en $C_1$–$C_4$ carbamoyle, nitro ou alcoxy en $C_1$–$C_8$ carbonyle, dont la chaîne alkyle est éventuellement interrompue par un ou plusieurs atomes d'oxygène et
$R^7$ halogène, phényle éventuellement substitué, alkyle en $C_1$–$C_{10}$ ou alcoxy en $C_1$–$C_{10}$ qui sont éventuellement substitués par phényle et/ou dont la chaîne alkyle est éventuellement interrompue par un ou plusieurs atomes d'oxygène, phénoxy, nitro, alcoxy en $C_1$–$C_4$ carbonyle, mono- ou dialkyle en $C_1$–$C_4$ amino, alkyl en $C_1$–$C_4$ thio, phénylthio, alcanoyle en $C_1$–$C_4$ amino, alcoxy en $C_1$–$C_4$ carbonylméthyle ou cyanométhyle.

4. Colorants disazothiophéniques selon la revendication 1, caractérisés par le fait que
X représente chlore, brome, hydroxy, mercapto, alcoxy en $C_1$–$C_4$ qui est éventuellement substitué par phényle, cycloalcoxy en $C_5$–$C_7$ phénoxy éventuellement substitué, alkyle en $C_1$–$C_4$ thio qui est éventuellement substitué par phényle, cycloalkyle en $C_5$–$C_7$ thio, phénylthio éventuellement substitué ou le reste $SO_2$-E, E étant mis pour méthyle, éthyle ou phényle.
Z cyano ou alcoxy en $C_1$–$C_8$ carbonyle dont la chaîne alkyle est éventuellement interrompue par un ou plusieurs atomes d'oxygène,
D le reste d'un composant diazo des séries benzole-, thiphène- ou isothiazole et
K le reste d'un composant de copulation de la série de l'aniline ou de la pyridine.

5. Utilisation des colorants disazothiophéniques selon la revendication 1 pour la teinture des fibres synthétiques.